(19) Europäisches Patentamt / European Patent Office / Office européen des brevets

(11) **EP 4 379 451 A1**

(12) **EUROPEAN PATENT APPLICATION**
published in accordance with Art. 153(4) EPC

(43) Date of publication:
**05.06.2024 Bulletin 2024/23**

(21) Application number: **22848946.4**

(22) Date of filing: **30.03.2022**

(51) International Patent Classification (IPC):
*G02B 27/01* (2006.01)    *B60K 35/00* (2006.01)
*G02B 5/18* (2006.01)    *G02B 5/32* (2006.01)

(52) Cooperative Patent Classification (CPC):
**B60K 35/00; G02B 5/18; G02B 5/32; G02B 27/01**

(86) International application number:
**PCT/JP2022/016242**

(87) International publication number:
**WO 2023/007863 (02.02.2023 Gazette 2023/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.07.2021 JP 2021125659**

(71) Applicant: **Panasonic Intellectual Property Management Co., Ltd.**
**Kadoma-shi, Osaka 571-0057 (JP)**

(72) Inventors:
• **MINAMI, Kazuhiro**
**Osaka 571-0057 (JP)**
• **SHOBAYASHI, Hiroyuki**
**Osaka 571-0057 (JP)**
• **KUZUHARA, Satoshi**
**Osaka 571-0057 (JP)**

(74) Representative: **Eisenführ Speiser**
**Patentanwälte Rechtsanwälte PartGmbB**
**Postfach 10 60 78**
**28060 Bremen (DE)**

(54) **OPTICAL SYSTEM AND HEAD-UP DISPLAY SYSTEM COMPRISING SAME**

(57) An optical system includes a light guide body. A light flux incident on the light guide body from the display is replicated in a first direction corresponding to a horizontal direction of the image due to diffraction by a diffraction structure of an expansion region, or a second direction corresponding to a vertical direction of the image. When a normal direction with respect to the light guide body of the expansion region is defined as a Z-axis direction, and a tangential plane is defined as an XY plane, and a traveling direction of a center light beam of the light flux incident on the expansion region on the XY plane is defined as an X axis, and a direction perpendicular to the X axis is defined as a Y axis, the diffraction structure of the expansion region is formed such that a light flux duplicated when the light flux incident on the expansion region is transmitted through the XY plane of the expansion region from a positive direction of the Z axis and a light flux duplicated when the light flux is transmitted through the XY plane of the expansion region from a negative direction of the Z axis are accommodated within a viewing angle at which the image is visually recognizable. The diffractive structure of the expansion region is inclined with respect to the Z-axis direction.

Fig.11

**Description**

TECHNICAL FIELD

The present disclosure relates to an optical system used for displaying an image and a head-up display system including the optical system.

BACKGROUND ART

Conventionally, a vehicle information projection system that performs augmented reality (AR) display using a head-up display has been disclosed. For example, the head-up display projects light representing a virtual image on a windshield of a vehicle to allow a driver to visually recognize the virtual image together with a real view of an outside world of the vehicle.

As a device for displaying a virtual image, Patent Document 1 describes an optical element including a waveguide (light guide body) for expanding an exit pupil in two directions. The optical element may utilize a diffractive optical element to expand the exit pupil. In addition, Document 2 describes a head-mounted display that performs augmented reality (AR) display using a volume hologram diffraction grating.

PRIOR ART DOCUMENTS

PATENT DOCUMENTS

Patent Document 1: US Patent No. 10429645
Patent Document 2: WO 2018/198587 A

SUMMARY OF THE INVENTION

PROBLEMS TO BE SOLVED BY THE INVENTION

However, for example, when a pupil expansion type hologram used for a head mounted display is realized by a head-up display, a visual field range in which an image is visible is narrow.

An object of the present disclosure is to provide an optical system and a head-up display system in which a visual field range in which an image is visible is expanded.

SOLUTIONS TO THE PROBLEMS

An optical system of the present disclosure includes: a display that emits a light flux visually recognized by an observer as an image; and a light guide body that replicates the light flux. The light guide body includes an incident surface on which the light flux from the display is incident and an emission surface from which the light flux is emitted from the light guide body. A light beam at a center of the light flux emitted from the display is incident on the incident surface of the light guide body. The light flux incident on the incident surface of the light guide body is changed in a traveling direction by diffraction by a diffraction structure of a coupling region in the light guide body. The light flux changed in the traveling direction is emitted from the emission surface after being expanded by being replicated in a first direction corresponding to a horizontal direction of the image visually recognized by the observer due to diffraction by a diffraction structure of an expansion region in the light guide body, a second direction corresponding to a vertical direction of the image, or both the directions. When a normal direction with respect to a surface of the light guide body at a center or a center of gravity of the expansion region is defined as a Z-axis direction, and a tangential plane is defined as an XY plane, and a traveling direction of a center light beam of the light flux incident on the expansion region on the XY plane is defined as an X axis, and a direction perpendicular to the X axis is defined as a Y axis, the diffraction structure of the expansion region is formed such that a light flux duplicated when the light flux incident on the expansion region is transmitted through the XY plane of the expansion region from a positive direction of the Z axis and a light flux duplicated when the light flux is transmitted through the XY plane of the expansion region from a negative direction of the Z axis are accommodated within a viewing angle at which the image is visually recognizable, and the diffractive structure of the expansion region is inclined with respect to the Z-axis direction.

Further, a head-up display system of the present disclosure includes: the above-described optical system; and a light-transmitting member that reflects the light flux emitted from a light guide body, in which the head-up display system displays the image as a virtual image so as to be superimposed on a real view visually recognizable through the light-transmitting member.

EFFECTS OF THE INVENTION

According to the optical system and the head-up display system of the present disclosure, it is possible to expand a visual field range in which an image is visible.

BRIEF DESCRIPTION OF THE DRAWINGS

Fig. 1 is a schematic perspective view illustrating a configuration of a light guide body.
Fig. 2 is an explanatory view illustrating directions of incident light and emission light to the light guide body of a head-mounted display.
Fig. 3 is an explanatory view illustrating directions of incident light and emission light to the light guide body of the head-up display.
Fig. 4 is a YZ plane cross-sectional view of a vehicle on which a head-up display system of an embodiment is mounted.
Fig. 5A is an explanatory view illustrating an optical path of a light flux emitted from a display.
Fig. 5B is an explanatory view illustrating a visual field area of a virtual image in a horizontal direction.
Fig. 5C is an explanatory view illustrating a visual field area of the virtual image in a vertical direction.
Fig. 6 is a see-through perspective view illustrating a configuration of a light guide body according to the embodiment.
Fig. 7 is an explanatory view illustrating an optical path at the center of a light flux emitted from the display.
Fig. 8 is a plan view of a first expansion region.
Fig. 9 is a cross-sectional view taken along line IX-IX of Fig. 8.
Fig. 10 is a plan view of the first expansion region.
Fig. 11 is an explanatory view illustrating a light flux incident on a diffraction structure and a replicated light flux.
Fig. 12 is a table showing numerical values in Examples and Comparative Examples.
Fig. 13 is an explanatory view illustrating a visual field area of a virtual image according to Example 1.
Fig. 14 is an explanatory view illustrating a visual field area of a virtual image according to Comparative Example 1.
Fig. 15 is an explanatory view illustrating a visual field area of a virtual image according to Example 2.
Fig. 16 is an explanatory view illustrating a visual field area of a virtual image according to Example 3.
Fig. 17 is an explanatory view illustrating a visual field area of a virtual image according to Example 4.
Fig. 18 is an explanatory view illustrating a visual field area of a virtual image according to Example 5.
Fig. 19 is an explanatory view illustrating a visual field area of a virtual image according to Example 6.
Fig. 20 is an explanatory view illustrating a visual field area of a virtual image according to Example 7.
Fig. 21 is an explanatory view illustrating a visual field area of a virtual image according to Comparative Example 2.
Fig. 22 is a graph showing a relationship between a viewing angle and a normalized diffraction efficiency.
Fig. 23 is a graph showing a relationship between a viewing angle and a normalized diffraction efficiency.

DETAILED DESCRIPTION

(Outline of present disclosure)

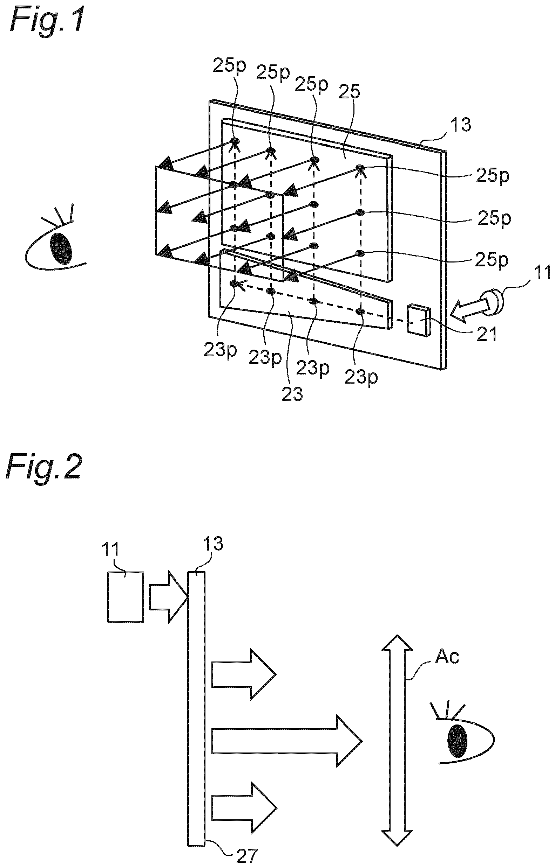

First, an outline of the present disclosure will be described with reference to Fig. 1. Fig. 1 is a schematic view illustrating a configuration of a light guide body 13. In an optical system used in a head mounted display (hereinafter, referred to as an HMD) or the like, a so-called pupil expansion type light guide body 13 is used. The pupil expansion type light guide body 13 includes a coupling region 21 where image light from a display 11 is incident to change a traveling direction, a first expansion region 23 that expands a light flux incident in a first direction, and a second expansion region 25 that expands a light flux incident in a second direction. The first direction and the second direction may intersect each other, for example, may be orthogonal.
The coupling region 21, the first expansion region 23, and the second expansion region 25 each have diffraction power for diffracting image light, and an embossed hologram or a volume hologram is formed. The embossed hologram is, for example, a diffraction grating. The volume hologram is, for example, a periodic refractive index distribution in the dielectric film. The coupling region 21 changes the traveling direction of the image light incident from the outside to the first expansion region 23 by the diffraction power.
In the first expansion region 23, for example, diffraction structural elements are disposed, and image light is replicated by dividing the incident image light into image light traveling in the first direction and image light traveling to the second expansion region 25 by diffraction power. For example, in Fig. 1, in the first expansion region 23, the diffraction structural elements are disposed at four points 23p arranged in a direction in which the image light travels by repeating total reflection. The diffraction structural element divides the image light at each point 23p, and advances the divided image light to the second expansion region 25. As a result, the light flux of the incident image light is replicated into the light fluxes of the four image light beams in the first direction to be expanded.

In the second expansion region 25, for example, diffraction structural elements are disposed, and image light is replicated by dividing the incident image light into image light traveling in the second direction and image light emitted from the second expansion region 25 to the outside by diffraction power. For example, in Fig. 1, three points 25p arranged in a direction in which the image light travels by repeating total reflection are disposed per row in the second expansion region 25, and diffraction structural elements are disposed at a total of 12 points 25p in four rows. The image light is divided at each point 25p, and the divided image light is emitted to the outside. As a result, the light fluxes of the image light incident in the four rows are respectively replicated into the light fluxes of the three image light beams in the second direction to be expanded. In this way, the light guide body 13 can replicate one incident light flux of the image light into the 12 light fluxes of the image light, and can replicate the light flux in the first direction and the second direction, respectively, to expand the visual field area. From the 12 light fluxes of the image light, an observer can visually recognize the light fluxes of the respective image light beams as a virtual image, and a visual recognition region where the observer can visually recognize the image light can be widened.

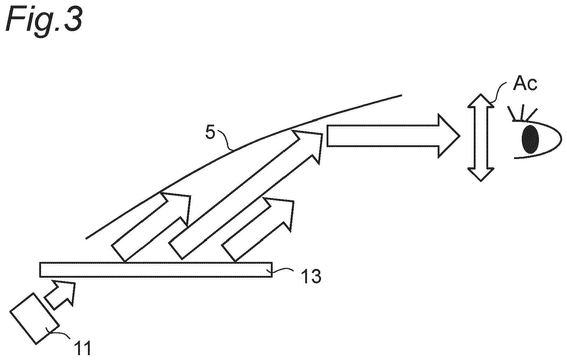

Next, a difference between a pupil expansion type HMD and a head-up display (hereinafter, referred to as an HUD) will be described with reference to Figs. 2 and 3. Fig. 2 is an explanatory view illustrating incident light and emission light of the HMD. Fig. 3 is an explanatory view illustrating incident light and emission light of the HUD.

As illustrated in Fig. 2, the light guide body 13 in the HMD substantially faces a visual recognition region Ac where the observer can view a virtual image. The image light vertically incident from the display 11 is divided in the light guide body 13, and the divided image light is vertically emitted from an emission surface 27 of the light guide body 13 toward the visual recognition region Ac.

On the other hand, as illustrated in Fig. 3, in the case of the HUD, the image light emitted from the light guide body 13 is reflected by, for example, a windshield 5 to be incident on the visual recognition region Ac, so that the divided image light is emitted in an oblique direction from the emission surface 27 of the light guide body 13. An optical system for the HUD will be described below.

(Embodiment)

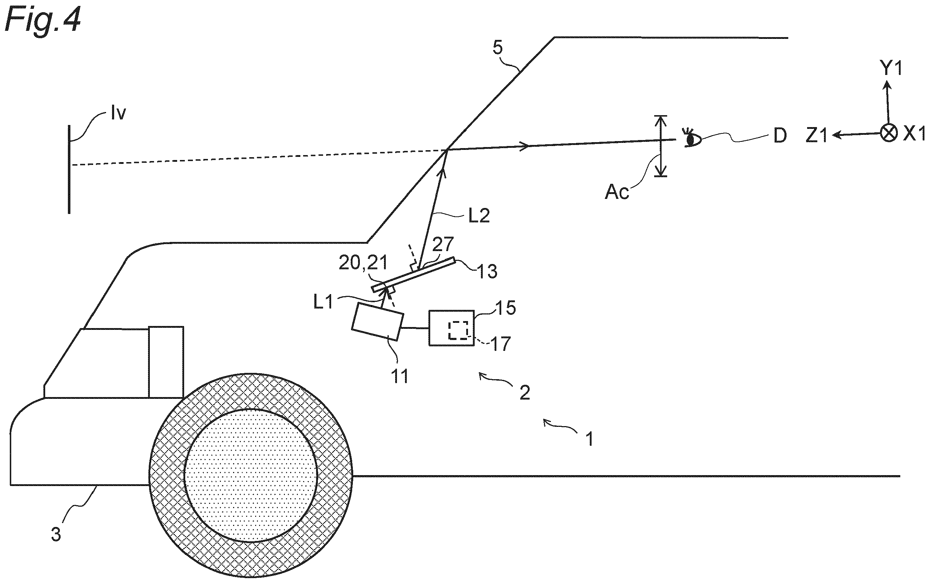

Hereinafter, an embodiment will be described with reference to Figs. 4 to 6. Note that components having functions common to those of the above-described components are denoted by the same reference numerals. In addition, the inclination angles of the windshield in the drawings are illustrated for easy understanding, and thus may vary depending on the drawings.

[1-1. Configuration]

[1-1-1. Overall Configurations of Optical System and Head-up Display system]

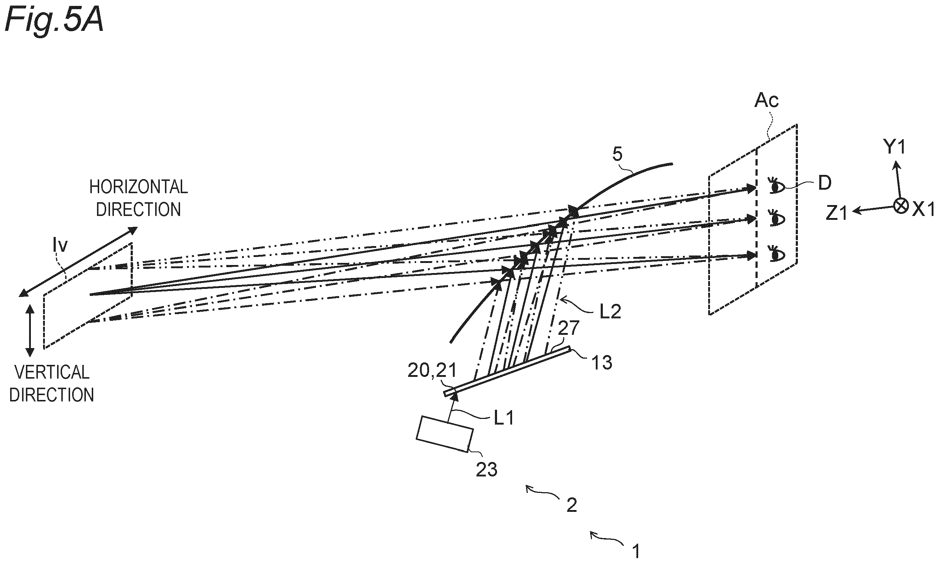

A specific embodiment of a head-up display system 1 (hereinafter, referred to as an HUD system 1) of the present disclosure will be described. Fig. 4 is a view illustrating a cross section of a vehicle 3 on which the HUD system 1 according to the present disclosure is mounted. Fig. 5A is an explanatory view illustrating an optical path of a light flux emitted from the display. In the embodiment, the HUD system 1 mounted on the vehicle 3 will be described as an example.

Hereinafter, directions related to the HUD system 1 will be described based on the X1 axis, the Y1 axis, and the Z1 axis illustrated in Fig. 4. The Z1-axis direction is a direction in which an observer visually recognizes a virtual image Iv from the visual recognition region Ac where the observer can visually recognize the virtual image Iv. The X1-axis direction is a horizontal direction orthogonal to the Z1-axis. The Y1-axis direction is a direction orthogonal to an X1Z1 plane formed by the X1-axis and the Z1-axis. Therefore, the X1-axis direction corresponds to the horizontal direction of the vehicle 3, the Y1-axis direction corresponds to the substantially vertical direction of the vehicle 3, and the Z1-axis direction corresponds to the substantially forward direction of the vehicle 3.

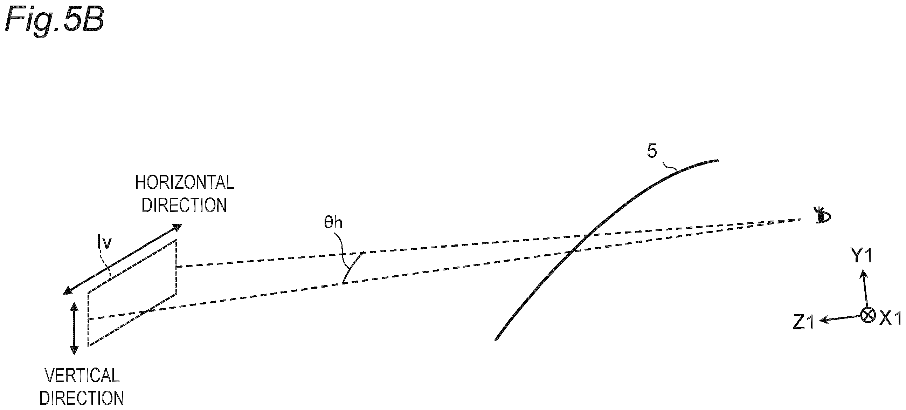

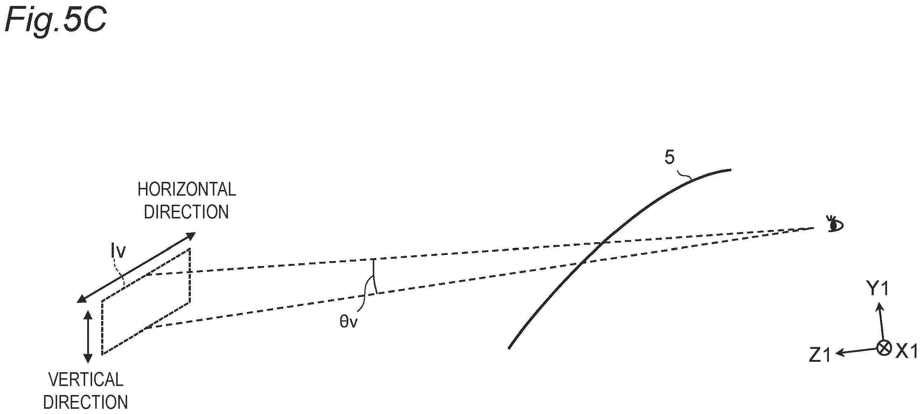

As illustrated in Fig. 4, the optical system 2 is disposed inside a dashboard (not illustrated) below the windshield 5 of the vehicle 3. The observer D sitting in a driver's seat of the vehicle 3 recognizes an image projected from the HUD system 1 as the virtual image Iv. In this manner, the HUD system 1 displays the virtual image Iv so as to be superimposed on a real view visually recognizable through the windshield 5. Since a plurality of replicated images is projected onto the visual recognition region Ac, the virtual image Iv can be visually recognized in the visual recognition region Ac even if the eye position of the observer D is shifted in the Y1-axis direction and the X1-axis direction. For the range of virtual image Iv visually recognized by observer D, angle θh indicating the viewing angle in the horizontal direction of virtual image Iv visually recognized by observer D is illustrated in Fig. 5B, and angle θv indicating the viewing angle in the vertical direction of virtual image Iv is illustrated in Fig. 5C. The observer D is a passenger riding in the moving body like the vehicle 3, and is, for example, a driver or a passenger sitting on a passenger seat.

Fig. 4 will be referred to. The HUD system 1 includes the optical system 2 and the windshield 5. The optical system 2 includes the display 11, the light guide body 13, and a controller 15. The display 11 emits a light flux L1 that forms an image visually recognized by the observer as the virtual image Iv. The light guide body 13 divides and replicates a light flux L1 emitted from the display 11, and guides the replicated light flux L2 to the windshield 5. The light flux L2 reflected by the windshield 5 is displayed as the virtual image Iv so as to be superimposed on a real view visible through the windshield 5.

The display 11 displays an image based on control by an external controller. As the display 11, for example, a liquid crystal display with a backlight, an organic light-emitting diode display, a plasma display, or the like can be used. In addition, as the display 11, an image may be generated using a screen that diffuses or reflects light and a projector or a scanning laser. The display 11 can display image content including various types of information such as a road guidance display, a distance to a vehicle ahead, a remaining battery level of the vehicle, and a current vehicle speed. As described above, the display 11 emits the light flux L1 including the image content visually recognized by the observer D as the virtual image Iv.

The controller 15 can be implemented by a circuit including a semiconductor element or the like. The controller 15 can be configured by, for example, a microcomputer, a CPU, an MPU, a GPU, a DSP, an FPGA, or an ASIC. The controller 15 reads data and programs stored in a built-in storage (not illustrated) and performs various arithmetic processing, thereby implementing a predetermined function. Furthermore, the controller 15 includes a storage 17.

The storage 17 is a storage medium that stores programs and data necessary for implementing the functions of the controller 15. The storage 17 can be implemented by, for example, a hard disk (HDD), an SSD, a RAM, a DRAM, a ferroelectric memory, a flash memory, a magnetic disk, or a combination thereof. The storage 17 stores a plurality of pieces of image data representing the virtual image Iv. The controller 15 determines the virtual image Iv to be displayed based on vehicle-related information acquired from the outside. The controller 15 reads the image data of the determined virtual image Iv from the storage and outputs the image data to the display 11.

[1-1-2. Light Guide Body]

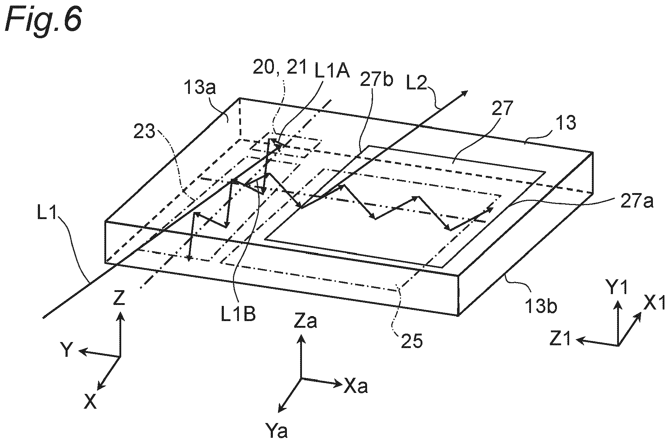

A configuration of the light guide body 13 will be described with reference to Fig. 6. Fig. 6 is a see-through perspective view illustrating a configuration of the light guide body 13. Hereinafter, a direction related to the expansion region of the light guide body 13 will be described based on the X axis, the Y axis, and the Z axis illustrated in Fig. 6. A normal direction with respect to the surface of the light guide body 13 at the center or the center of gravity of the first expansion region 23 is defined as a Z-axis direction, and a tangential plane is defined as an XY plane. In the XY plane, a traveling direction of a center light beam of a light flux incident on the first expansion region 23 is defined as an X-axis direction, and a direction perpendicular to the X-axis direction is defined as a Y-axis direction. Similarly, a normal direction with respect to the surface of the light guide body 13 at the center or the center of gravity of the second expansion region 25 is defined as a Za-axis direction, and a tangential plane is defined as an XaYa plane. In the XaYa plane, a traveling direction of a center light beam of a light flux incident on the second expansion region is defined as an Xa-axis direction, and a direction perpendicular to the Xa-axis direction is defined as a Ya-axis direction.

The light guide body 13 has a first main surface 13a and a second main surface 13b. The first main surface 13a and the second main surface 13b face each other. The light guide body 13 includes an incident surface 20, a coupling region 21, a first expansion region 23, a second expansion region 25, and an emission surface 27. The incident surface 20, the coupling region 21, the first expansion region 23, and the second expansion region 25 are included in the second main surface 13b, and the emission surface 27 is included in the first main surface 13a. The emission surface 27 faces the second expansion region 25. Note that the coupling region 21, the first expansion region 23, and the second expansion region 25 may exist between the first main surface 13a and the second main surface 13b. The first main surface 13a faces the windshield 5. In the present embodiment, the incident surface 20 is included in the coupling region 21, but may be included in the first main surface 13a which is a surface facing the coupling region 21. The emission surface 27 may be included in the second expansion region 25.

The coupling region 21, the first expansion region 23, and the second expansion region 25 have different diffraction powers, and a diffraction structural element is formed in each region. The coupling region 21, the first expansion region 23, and the second expansion region 25 have different diffraction angles of image light. In addition, the light guide body 13 has a configuration in which the incident light flux is totally reflected inside. The light guide body 13 is made of, for example, a glass or resin plate whose surface is mirror-finished. The shape of the light guide body 13 is not limited to a planar shape, and may be a curved shape. As such, the light guide body 13 includes a diffraction structural element such as a volume hologram that diffracts light in part. The coupling region 21, the first expansion region 23, and the second expansion region 25 are three-dimensional regions in a case where a volume hologram is included.

The coupling region 21 is a region where the light flux L1 emitted from the display 11 is incident from the incident surface 20 and the traveling direction of the light flux L1 is changed. The coupling region 21 has diffraction power, changes the propagation direction of the incident light flux L1 to the direction of the first expansion region 23, and emits the light flux L1 as a light flux L1A. In the present embodiment, coupling is a state of propagating in the light guide body 13 under the total reflection condition.

The first expansion region 23 expands the light flux L1A in the first direction corresponding to the horizontal direction of the virtual image Iv, and emits the light flux L1A to the second expansion region in the second direction intersecting the first direction. In the first expansion region 23 expanding the light flux L1A in the first direction, the length in the first direction is larger than the length in the second direction. In the embodiment, the light guide body 13 is disposed such that the first direction is the horizontal direction (the direction of the X1 axis). However, the present disclosure is not limited to this, and the first direction may not completely coincide with the horizontal direction. The light flux L1A propagated from the coupling region 21 is propagated in the first direction while repeating total reflection on the first main surface 13a and the second main surface 13b, and the light flux L1 is replicated by the diffraction structure of the first expansion region 23 formed on the second main surface 13b and emitted to the second expansion region 25.

The second expansion region 25 expands the light flux L1B in the second direction corresponding to the vertical direction of the virtual image Iv, and emits the expanded light flux L2 from the emission surface 27. The second direction is, for example, perpendicular to the first direction. The light guide body 13 is disposed such that the second direction is the Z1-axis direction. The light flux L1B propagated from the first expansion region 23 is propagated in the second direction while repeating total reflection on the first main surface 13a and the second main surface 13b, and the light flux L1B is replicated by the diffraction structure of the second expansion region 25 formed on the second main surface 13b and emitted to the outside of the light guide body 13 via the emission surface 27.

Therefore, when viewed from the viewpoint of the observer D, the light guide body 13 expands the light flux L1 incident on the incident surface 20 and changed in the traveling direction by replicating the light flux L1 in the horizontal direction (the direction of the X1 axis) of the virtual image Iv visually recognized by the observer D, and then further expands the light flux L1 by replicating the light flux L1 in the vertical direction (the direction of the Y1 axis) of the virtual image Iv to emit the light flux L2 from the emission surface 27. Here, replicating in the horizontal direction of the image is not limited to replicating only in the complete horizontal direction, and also includes replicating in the substantially horizontal direction. Further, replicating in the vertical direction of the image is not limited to replicating only in the complete vertical direction, and also includes replicating in the substantially vertical direction.

[1-1-3. Pupil Expansion Order]

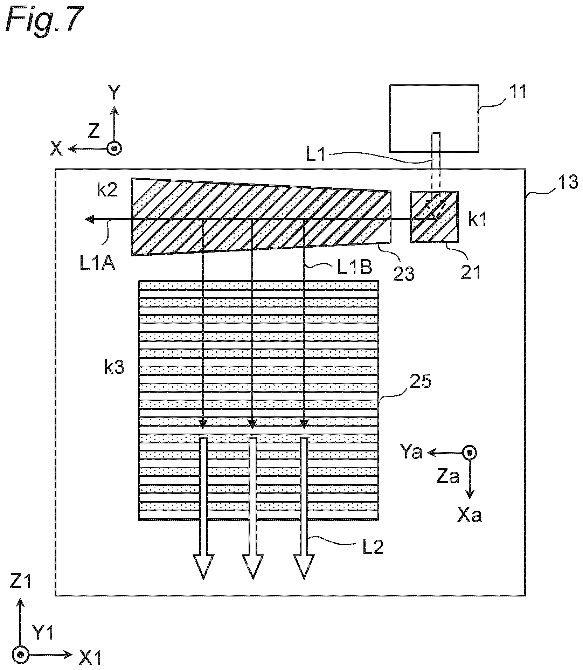

In the light guide body 13 having the above-described arrangement, in the HUD system 1, the magnitudes of the wave number vectors of the first expansion region 23 and the second expansion region 25 are different depending on the order of pupil expansion of the light flux L1 of the image light. The order of pupil expansion in the embodiment will be described with reference to Fig. 7. Fig. 7 is an explanatory view illustrating an optical path at the center of a light flux emitted from the display.

The light flux L1 of the image light incident on the light guide body 13 changes the propagation direction to the first expansion region 23 expanding the pupil in the horizontal direction (X-axis direction) as the first direction by the diffraction structure formed in the coupling region 21. Therefore, after obliquely entering the coupling region 21, the light flux L1 propagates in the direction of the first expansion region 23 as the light flux L1A under the action of the wave number vector k1 illustrated in Fig. 7.

The light flux L1A propagating to the first expansion region 23 extending in the first direction is divided into the light flux L1A propagating in the first direction and the light flux L1B replicated and changed in the propagation direction to the second expansion region 25 by the diffraction structure formed in the first expansion region 23 while repeating total reflection. At this time, the replicated light flux L1B propagates in the direction of the second expansion region 25 under the action of the wave number vector k2 illustrated in Fig. 7.

The light flux L1B changed in the propagation direction to the second expansion region 25 extending along the negative direction of the Z1 axis as the second direction is divided into the light flux L1B propagating in the second direction and the light flux L2 replicated and emitted from the second expansion region 25 to the outside of the light guide body 13 via the emission surface 27 by the diffraction structure formed in the second expansion region 25. At this time, the replicated light flux L2 propagates in the direction of the emission surface 27 under the action of the wave number vector k3 illustrated in Fig. 7.

[1-1-4. Diffraction Structure]

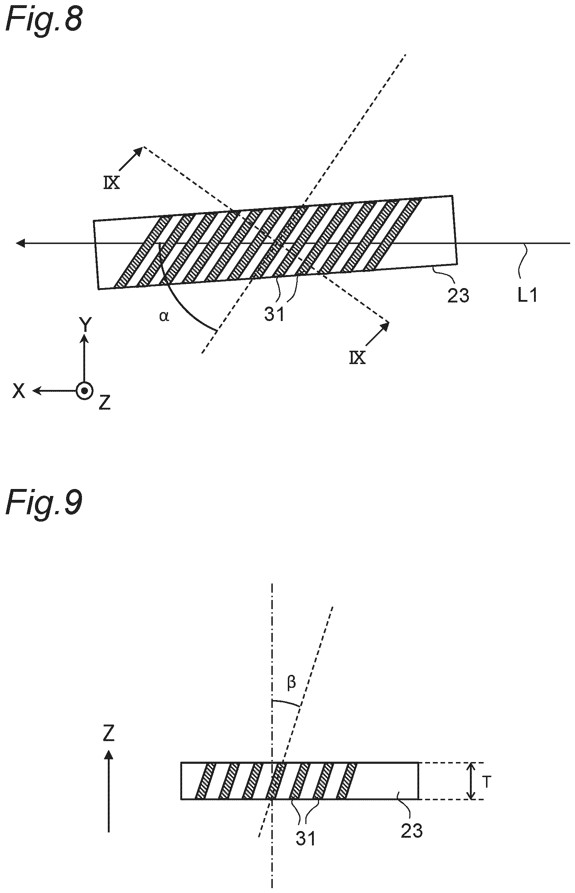

Next, the diffraction structure of the first expansion region 23 will be described with reference to Figs. 8 and 9. Fig. 8 is a plan view of the first expansion region 23, and Fig. 9 is a cross-sectional view taken along line IX-IX of Fig. 8.

When the diffraction structure of the first expansion region 23 is, for example, a volume hologram, an interference fringe 31 is formed as the diffraction structure in the first expansion region 23. In the first expansion region 23, an angle between the extending direction of the interference fringe 31 and the traveling direction of the light flux L1A on the XY plane is α. In addition, an inclination angle of the interference fringe 31 with respect to the vertical direction is β in a cross-sectional view of the diffraction structure in the vertical direction, that is, in a cross-sectional view taken along line IX-IX of Fig. 8.

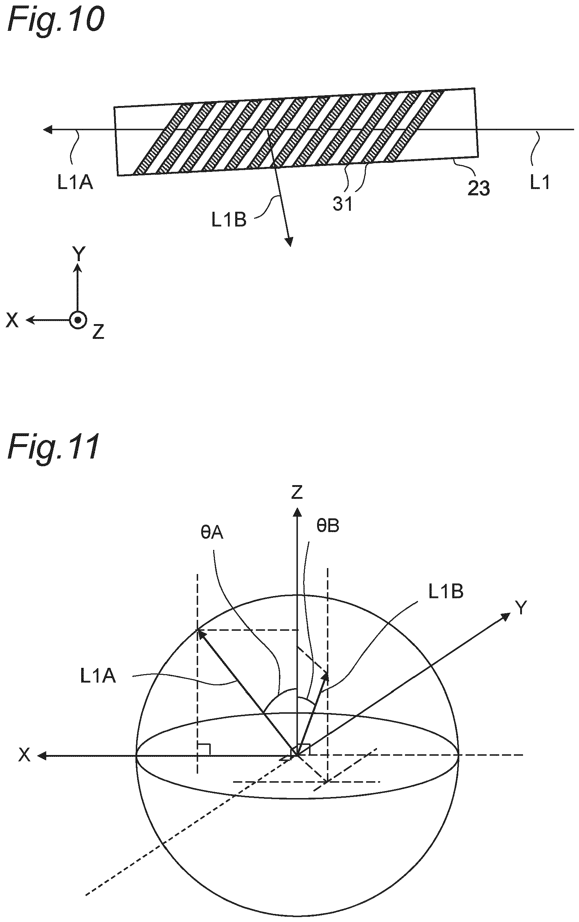

As illustrated in Fig. 10, the light flux L1A propagating to the first expansion region 23 extending in the first direction is divided into the light flux L1A propagating in the first direction and the light flux L1B replicated and changed in the propagation direction to the second expansion region 25 by the diffraction structure formed in the first expansion region 23 while repeating total reflection.

Fig. 11 illustrates the light flux L1B replicated when the light flux L1A is transmitted through the XY plane of the first expansion region 23 from the negative direction to the positive direction of the Z axis in the spherical coordinate system. Assuming that the viewing angle of the virtual image Iv viewed by the observer D is defined as ± F degrees, that the angle of the center light beam of the light flux L1A with respect to the Z axis is defined as θA degrees, and that the angle of the center light beam of the light flux L1B with respect to the Z axis is defined as θB degrees, the following expressions (1) and (2) are satisfied.

$$| \theta A - \theta B | < | F | / 2 \cdots \text{Expression (1)}$$

$$| \beta | \times 2 \times \cos (\alpha) \leq | F | - | \theta A - \theta B | \cdots \text{Expression (2)}$$

where β ≠ 0.

The viewing angle of the virtual image Iv in the horizontal direction is $2 \times | F | = \theta h$, and the viewing angle of the virtual image Iv in the vertical direction is $2 \times | F | = \theta v$ (see Figs. 5B and 5C). Hereinafter, the viewing angle in the horizontal direction will be described, but the same relationship holds for the viewing angle in the vertical direction.

(1) By $| \theta A - \theta B |$ in the expression, the center of two peaks of the diffraction efficiency at the time of transmission from the positive direction to the negative direction along the Z axis and the diffraction efficiency at the time of transmission from the negative direction to the positive direction is determined. In addition, by $| \beta | \times 2 \times \cos (\alpha)$ in Expression (2), the separation amount between two peaks of the diffraction efficiency at the time of transmission from the positive direction to the negative direction along the Z axis and the diffraction efficiency at the time of transmission from the negative direction to the positive direction is determined. In the case of β = 0, the light flux L1B replicated when the light flux L1A is transmitted through the first expansion region 23 from the positive direction to the negative direction of the Z axis and the light flux L1B replicated when the light flux L1A is transmitted from the negative direction to the positive direction of the Z axis have the same diffraction efficiency, so that the angle of view in the horizontal direction does not expand. On the other hand, in the case of β ≠ 0, the light flux L1B duplicated when the light flux L1A is transmitted through the first expansion region 23 from the positive direction to the negative direction of the Z axis and the light flux L1B duplicated when the light flux L1A is transmitted from the negative direction to the positive direction of the Z axis have different diffraction efficiencies, so that the angle of view in the horizontal direction can be expanded.

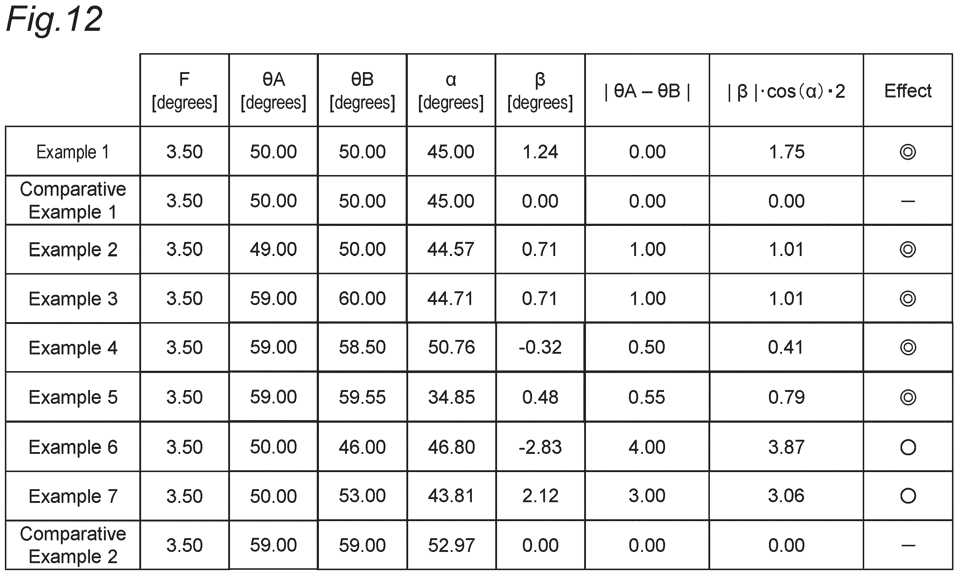

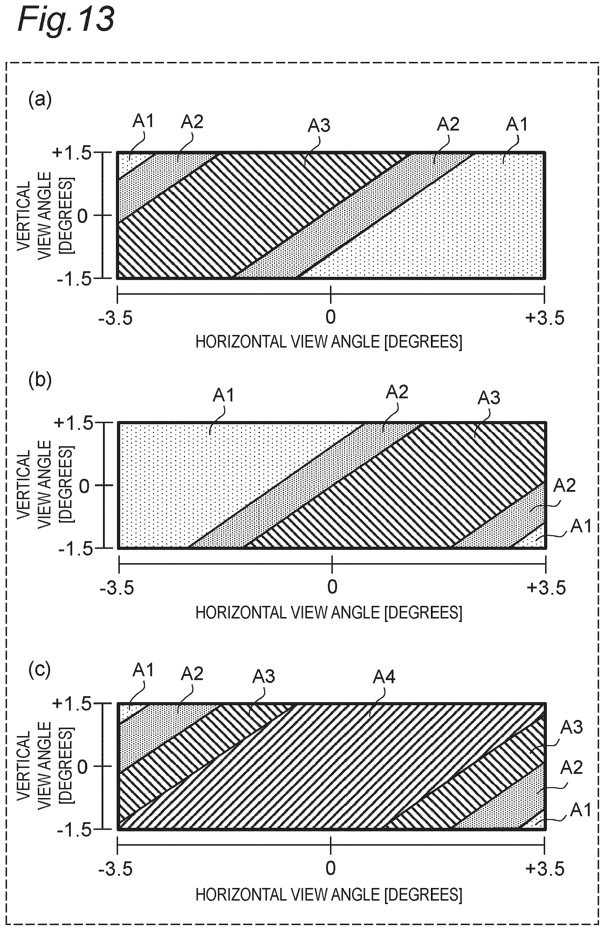

Next, Examples and Comparative Examples will be described with reference to Figs. 12 to 21. Fig. 12 is a table of parameters in Examples and Comparative Examples. Figs. 13 to 21 illustrate a diffraction efficiency at a viewing angle in each of Examples and Comparative Examples. Figs. 13(a), 14(a), 15(a), 16(a), 17(a), 18(a), 19(a), 20(a), and 21(a) illustrate the diffraction efficiency of the light flux L1B replicated when the light flux L1A is transmitted through the first expansion region 23 from the negative direction to the positive direction of the Z axis under each condition. Figs. 13(b), 14(b), 15(b), 16(b), 17(b), 18(b), 19(b), 20(b), and 21(b) illustrate the diffraction efficiency of the light flux L1B replicated when the light flux L1A is transmitted through the first expansion region 23 from the positive direction to the negative direction of the Z axis under each condition. In each of Examples and Comparative Examples, the thickness of the volume hologram is 5 μm.

In Example 1 to Comparative Example 2, the viewing angles F are all 3.50 degrees. The viewing angles F in Example 1 to Comparative Example 2 each indicate an angle of view (horizontal view angle) in the horizontal direction (left-right direction). The same relationship holds for an angle of view in the vertical direction (vertical view angle). In the case of Example 1 illustrated in Fig. 13, the angle θA and the angle θB described in relation to Expressions (1) and (2) are 50.00 degrees, the angle α is 45.00 degrees, and the inclination angle β is 1.24 degrees. Fig. 13(c) illustrates the diffraction efficiency of the light flux L1B that has reciprocated once in the first expansion region 23 with respect to the Z axis. That is, Fig. 13(c) illustrates the diffraction efficiency obtained by adding the diffraction efficiency of the light flux L1B replicated when the first expansion region 23 is transmitted from the negative direction to the positive direction of the Z axis and the diffraction efficiency of the light flux L1B replicated when the first expansion region 23 is transmitted from the positive direction to the negative direction of the Z axis. The diffraction efficiency is indicated in stages from level A1 to level A5, and the diffraction efficiency increases from level A1 to level A4. Level A1 indicates a diffraction efficiency of 0% or more and less than 10%, level A2 indicates a diffraction efficiency of 10% or more and less than 20%, level A3 indicates a diffraction efficiency of 20% or more and less than 30%, and level A4 indicates a diffraction efficiency of 30% or more and less than 40%.

According to Example 1, since β ≠ 0 and Expressions (1) and (2) are satisfied, as illustrated in Figs. 13(a) and (b), peaks of the diffraction efficiency exist separately on the left and right of the angle of view, and a high diffraction efficiency can be obtained in a wide range. Thus, the effect of view angle enlargement can be obtained.

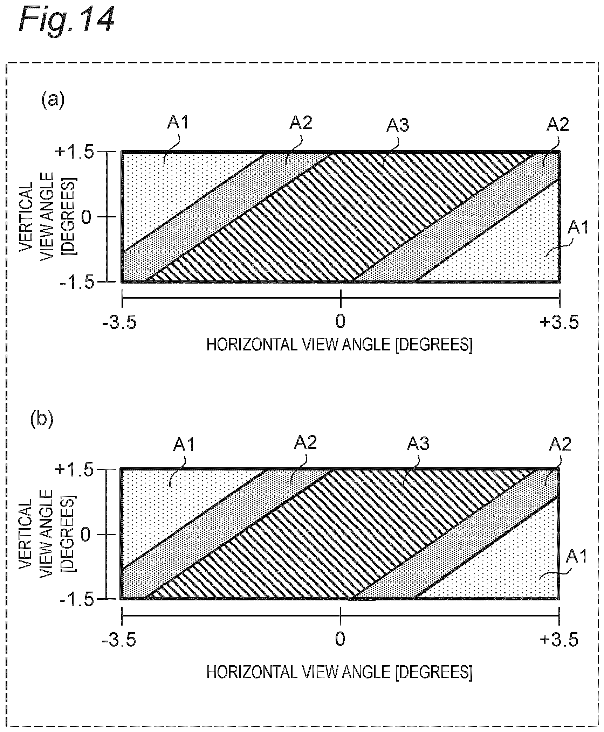

On the other hand, in the case of Comparative Example 1 illustrated in Fig. 14, the angle θA and the angle θB are 50.00 degrees, the angle α is 45.00 degrees, and the inclination angle β is 0 degrees. Since β = 0, in both the case of transmitting through the first expansion region 23 from the positive direction of the Z axis and the case of transmitting the first expansion region 23 from the negative direction, the positions of the peaks of the diffraction efficiency within the viewing angle are the same. Therefore, the effect of view angle enlargement cannot be obtained even if the diffraction efficiency at the center portion is good.

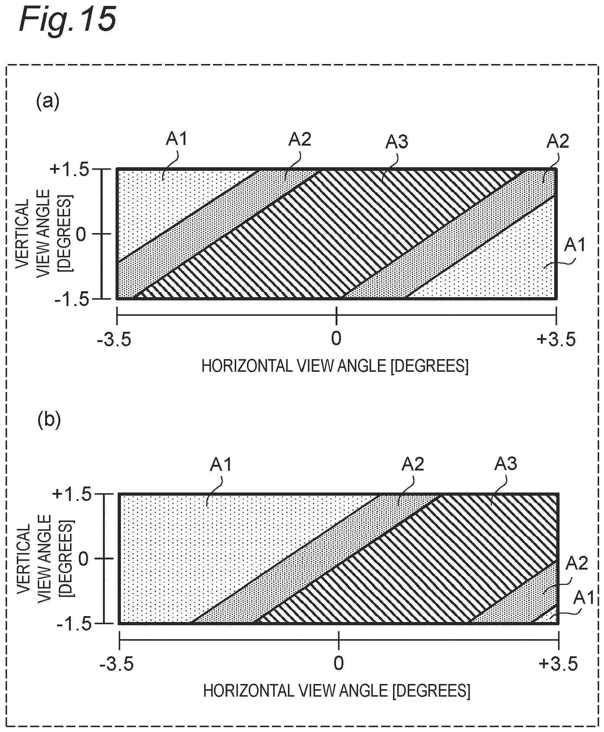

In the case of Example 2 illustrated in Fig. 15, the angle θA is 49.00 degrees, the angle θB is 50.00 degrees, the angle α is 44.57 degrees, and the inclination angle β is 0.71 degrees. According to Example 2, β ≠ 0, and Expressions (1) and (2) are satisfied. As illustrated in Fig. 15(a), the center of the angle of view of the diffraction efficiency of the light flux L1B replicated when the first expansion region 23 is transmitted from the negative direction to the positive direction of the Z axis is high. Further, as illustrated in Fig. 15(b), the diffraction efficiency of the light flux L1B replicated when the first expansion region 23 is transmitted from the positive direction to the negative direction of the Z axis is higher on the right side of the angle of view. In this way, since the peak positions of the diffraction efficiency are separated, the effect of view angle enlargement can be obtained.

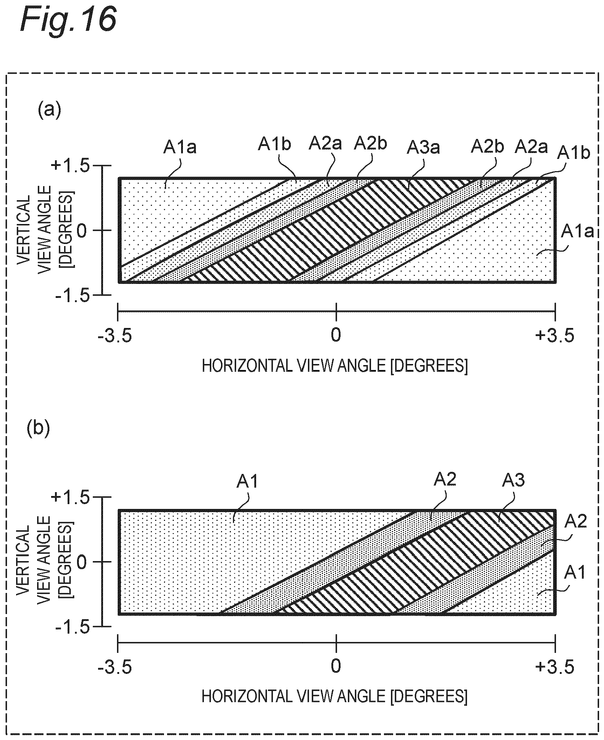

In the case of Example 3 illustrated in Fig. 16, the angle θA is 59.00 degrees, the angle θB is 60.00 degrees, the angle α is 44.71 degrees, and the inclination angle β is 0.71 degrees. According to Example 3, β ≠ 0, and Expressions (1) and (2) are satisfied. In Fig. 16(a), level A1a indicates a diffraction efficiency of 0% or more and less than 5%, level A1b indicates a diffraction efficiency of 5% or more and less than 10%, level A2a indicates a diffraction efficiency of 10% or more and less than 15%, level A2b indicates a diffraction efficiency of 15% or more and less than 20%, and level A3a indicates a diffraction efficiency of 20% or more and less than 25%. As illustrated in Fig. 16(a), the center of the angle of view of the diffraction efficiency of the light flux L1B replicated when the first expansion region 23 is transmitted from the negative direction to the positive direction of the Z axis is high. Further, as illustrated in Fig. 16(b), the diffraction efficiency of the light flux L1B replicated when the first expansion region 23 is transmitted from the positive direction to the negative direction of the Z axis is higher on the right side of the angle of view. In this way, since the peak positions of the diffraction efficiency are separated, the effect of view angle enlargement can be obtained.

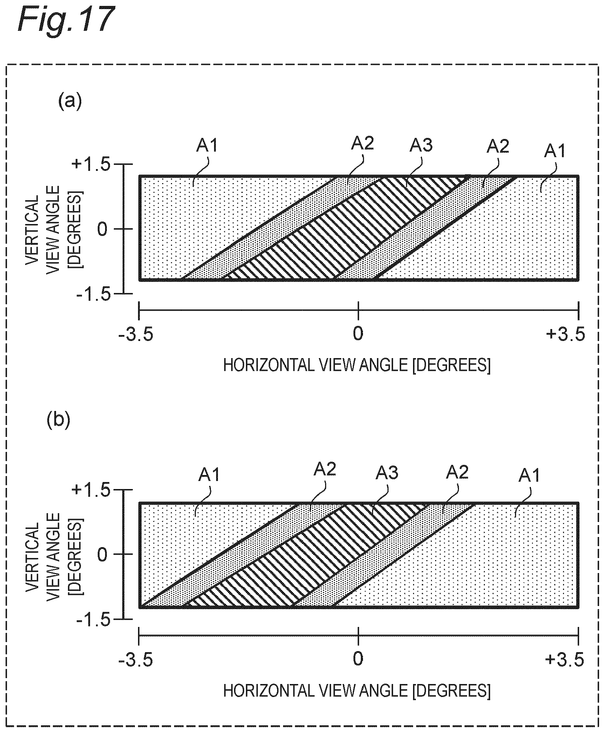

In the case of Example 4 illustrated in Fig. 17, the angle θA is 59.00 degrees, the angle θB is 58.50 degrees, the angle α is 50.76 degrees, and the inclination angle β is -0.32 degrees. According to Example 4, β ≠ 0, and Expressions (1) and (2) are satisfied. As illustrated in Fig. 17(a), the center of the angle of view of the diffraction efficiency of the light flux L1B replicated when the first expansion region 23 is transmitted from the negative direction to the positive direction of the Z axis is high. Further, as illustrated in Fig. 17(b), the diffraction efficiency of the light flux L1B replicated when the first expansion region 23 is transmitted from the positive direction to the negative direction of the Z axis is higher on the left side of the angle of view. In this way, since the peak positions of the diffraction efficiency are separated, the effect of view angle enlargement can be obtained.

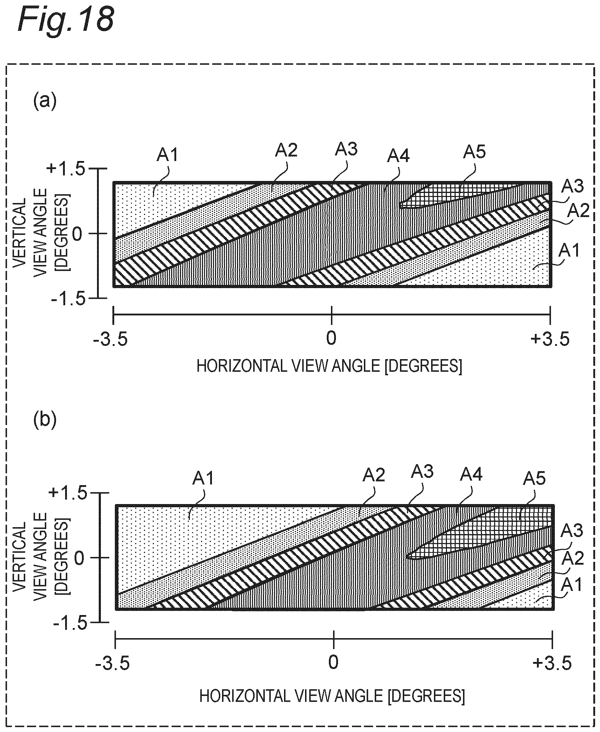

In the case of Example 5 illustrated in Fig. 18, the angle θA is 59.00 degrees, the angle θB is 59.55 degrees, the angle α is 34.85 degrees, and the inclination angle β is 0.48 degrees. According to angle Example 5, β ≠ 0, and Expressions (1) and (2) are satisfied. In Fig. 18, level A5 indicates a diffraction efficiency of 40% or more and less than 50%. As illustrated in Fig. 18(a), the center of the angle of view of the diffraction efficiency of the light flux L1B replicated when the first expansion region 23 is transmitted from the negative direction to the positive direction of the Z axis is high. Further, as illustrated in Fig. 18(b), the diffraction efficiency of the light flux L1B replicated when the first expansion region 23 is transmitted from the positive direction to the negative direction of the Z axis is higher on the right side of the angle of view. In this way, since the peak positions of the diffraction efficiency are separated, the effect of view angle enlargement can be obtained.

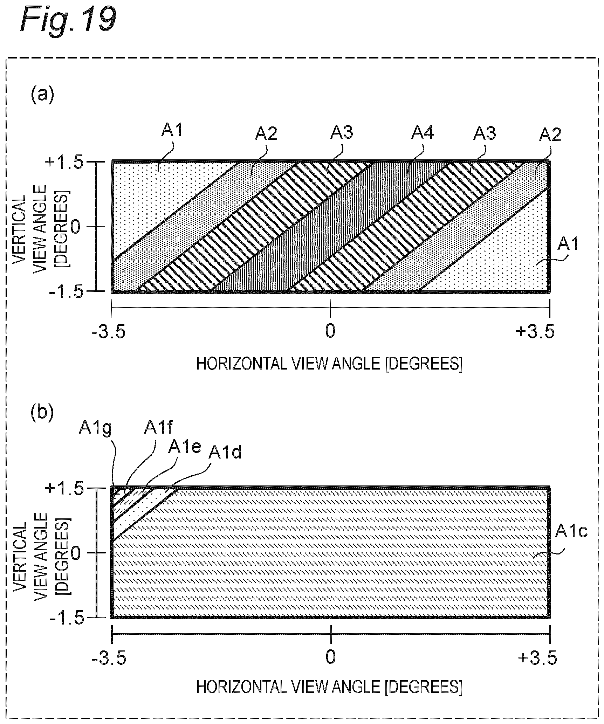

In the case of Example 6 illustrated in Fig. 19, the angle θA is 50.00 degrees, the angle θB is 46.00 degrees, the angle α is 46.80 degrees, and the inclination angle β is -2.83 degrees. In Fig. 19, level A1c indicates a diffraction efficiency of 0% or more and less than 2%, level A1d indicates a diffraction efficiency of 2% or more and less than 4%, level A1e indicates a diffraction efficiency of 4% or more and less than 6%, level A1f indicates a diffraction efficiency of 6% or more and less than 8%, and level A1g indicates a diffraction efficiency of 8% or more and less than 10%. According to Example 6, β ≠ 0, but Expressions (1) and (2) are not satisfied. Therefore, as illustrated in Figs. 19(a) and (b), the positions of the peaks of the diffraction efficiency in the viewing angle are different between the case of transmitting the first expansion region 23 from the positive direction of the Z axis and the case of transmitting the first expansion region from the negative direction, so that the effect of view angle enlargement can be obtained. However, since Expressions (1) and (2) are not satisfied, there is a peak of the diffraction efficiency more outward of the angle of view, as illustrated in Fig. 19(b), the diffraction efficiency within the angle of view of the light flux L1B replicated when the first expansion region 23 is transmitted from the positive direction to the negative direction of the Z axis is low, and the effect of enlarging the angle of view is smaller than that of Examples 1 to 5.

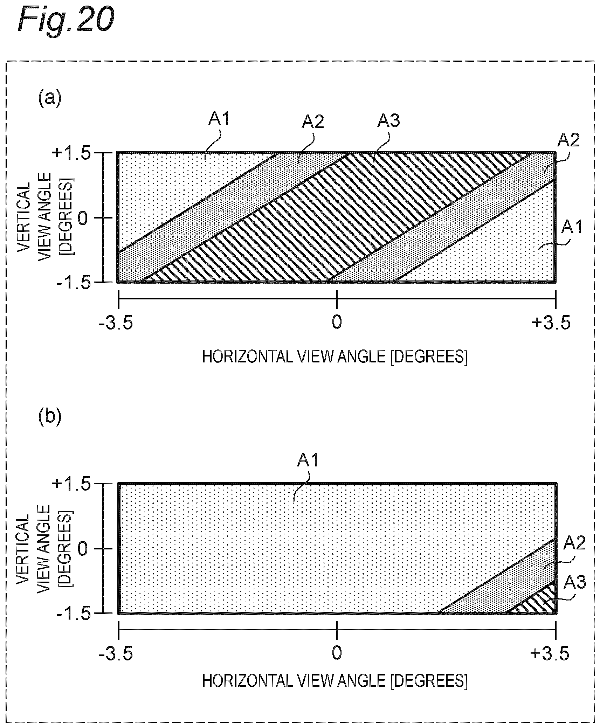

In the case of Example 7 illustrated in Fig. 20, the angle θA is 50.00 degrees, the angle θB is 53.00 degrees, the angle α is 43.81 degrees, and the inclination angle β is 2.12 degrees. According to Example 7, β ≠ 0, but Expressions (1) and (2) are not satisfied. Therefore, as illustrated in Figs. 20(a) and (b), the positions of the peaks of the diffraction efficiency in the viewing angle are different between the case of transmitting the first expansion region 23 from the positive direction of the Z axis and the case of transmitting the first expansion region from the negative direction, so that the effect of view angle enlargement can be obtained. However, since Expressions (1) and (2) are not satisfied, as illustrated in Fig. 20(b), the diffraction efficiency within the angle of view of the light flux L1B replicated when the first expansion region 23 is transmitted from the positive direction to the negative direction of the Z axis is low, and the effect of enlarging the angle of view is smaller than that of Examples 1 to 5.

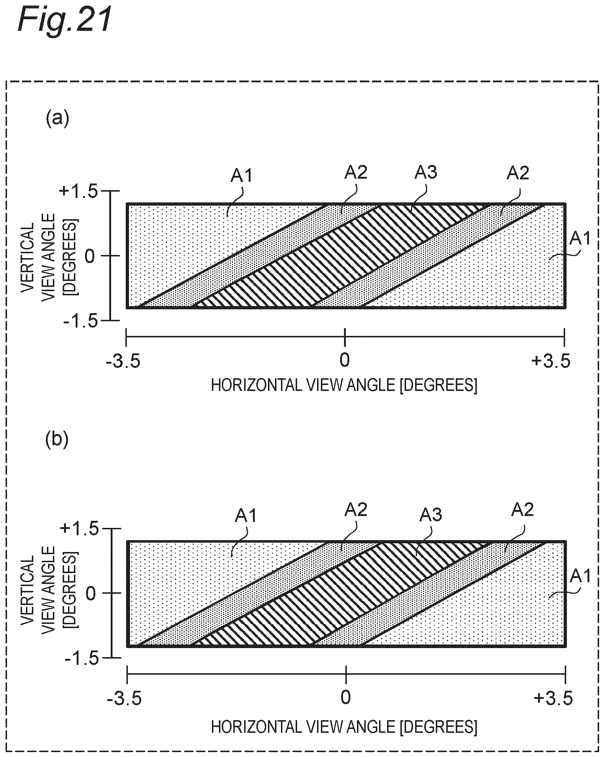

In the case of Comparative Example 2 illustrated in Fig. 21, the angles θA and θB are 59.00 degrees, the angle α is 52.97 degrees, and the inclination angle β is 0 degrees. Although the value of α is different from that in Comparative Example 1, similarly to Comparative Example 1, since β = 0, in both the case of transmitting through the first expansion region 23 from the positive direction of the Z axis and the case of transmitting the first expansion region 23 from the negative direction, the positions of the peaks of the diffraction efficiency within the viewing angle are the same. Therefore, the effect of view angle enlargement cannot be obtained even if the diffraction efficiency at the center portion is good.

Even when the thickness T in the Z direction of the volume hologram illustrated in Fig. 9 and the light flux L1A having the wavelength λ [μm] satisfy the following relational expression, the diffraction efficiency is improved by the present embodiment.

$$T > (-2.3576 \times \lambda + 0.0952) \times |F| + (22.3540 \times \lambda - 0.9125) \cdots \text{Expression (3)}$$

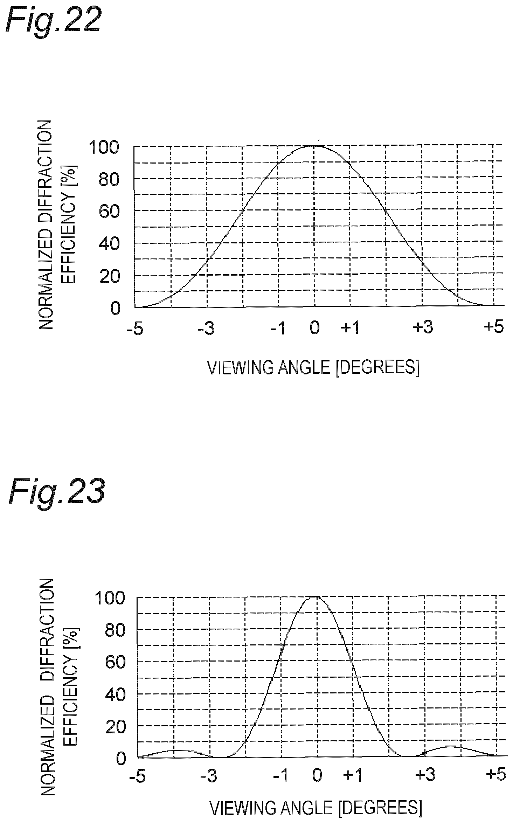

Fig. 22 is a graph showing an example of a normalized diffraction efficiency in the vicinity of the lower limit of the thickness T in Expression (3). When the thickness T is larger than the value on the right side of Expression (3), the diffraction efficiency may be zero within the range of the viewing angle. As a result, a part of the image is missing and the quality is deteriorated, but since the diffraction efficiency is improved according to the present embodiment, the thickness of the volume hologram satisfying the relationship of Expression (3) can be adopted.

Even when the thickness T in the Z direction of the volume hologram illustrated in Fig. 9 and the light flux L1A having the wavelength λ [μm] satisfy the following relational expression, the diffraction efficiency is improved by the present embodiment.

$$T < (-3.8645 \times \lambda - 0.2185) \times |F| + (37.4910 \times \lambda + 1.5298) \cdots \text{Expression (4)}$$

Fig. 23 is a graph showing an example of a normalized diffraction efficiency in the vicinity of the upper limit of the thickness T in Expression (4). When the thickness T is smaller than the value on the right side of Expression (4), the diffraction efficiency is zero or more within a half range of the viewing angle. As a result, when the thickness T is equal to or larger than the value on the right side of Expression (4), the range in which the diffraction efficiency is equal to or larger than zero becomes too narrow, but in the range less than the value on the right side of Expression (4), the diffraction efficiency is improved according to the present embodiment, so that it is possible to display an image in the entire range of the viewing angle.

In the present embodiment, the second expansion region 25 also has the same structure as the diffractive structure of the first expansion region 23. Such a structure may be provided only in one of the first expansion region 23 and the second expansion region 25, or the optical system 2 may further include another expansion region, and this another expansion region may have such a diffractive structure. In addition, the functions of the first expansion region 23 and the second expansion region 25 may be realized by one expansion region, and this one expansion region has, for example, a two-dimensional interference fringe, so that the incident light flux can be replicated in the horizontal direction and the vertical direction.

[1-2. Effects, etc.]

The optical system 2 of the present disclosure includes the display 11 that emits the light flux L1 visually recognized by the observer D as the virtual image Iv, and the light guide body 13 that duplicates the light flux L1. The light guide body 13 includes the incident surface 20 on which the light flux L1 from the display 11 is incident and the emission surface 27 from which the light flux L2 is emitted from the light guide body 13. The light beam at the center of the light flux L1 emitted from the display 11 is incident on the incident surface 20 of the light guide body 13. The light flux L1 incident on the incident surface 20 of the light guide body 13 is changed in the traveling direction by diffraction due to the diffraction structure of the coupling region in the light guide body 13. The light flux changed in the traveling direction is expanded by being replicated in the first direction corresponding to the horizontal direction of the virtual image Iv visually recognized by the observer D, the second direction corresponding to the vertical direction of the virtual image Iv, or both the directions by diffraction due to the diffraction structure of the expansion region in the light guide body 13, and then emitted from the emission surface 27. When the normal direction with respect to the surface of the light guide body 13 at the center or the center of gravity of the expansion region is defined as the Z-axis direction, the tangential plane is defined as the XY plane, the light flux incident on the expansion region is defined as the light flux L1A, the light flux diffracted and emitted in the expansion region is defined as the light flux L1B, and in the XY plane, the traveling direction of the center light beam of the light flux L1A is defined as the X-axis, and the direction perpendicular to the X-axis is defined as the Y-axis, the diffraction structure of the expansion region is formed such that the light flux L1B replicated when the light flux L1A is transmitted through the XY plane of the expansion region from the positive direction of the Z-axis and the light flux L1B replicated when the light flux L1A is transmitted from the negative direction of the Z-axis are accommodated at a viewing angle at which a virtual image can be visually recognized, and the diffraction structure of the expansion region is inclined with respect to the Z-axis direction.

Since the diffraction structure of the expansion region is inclined with respect to the Z-axis direction, the peaks of the diffraction efficiency of the light flux L1B duplicated when the light flux L1A is transmitted through the XY plane of the expansion region from the positive direction of the Z-axis and the light flux L1B duplicated when the light flux L1A is transmitted through the XY plane of the expansion region from the negative direction of the Z-axis can be formed at different positions within the viewing angle. Therefore, it is possible to provide the optical system in which the visual field range in which the virtual image is visible is expanded.

Further, by projecting light emitted from the optical system 2 onto the windshield 5 of the vehicle 3, the virtual image Iv suitable for the observer D who drives the vehicle 3 can be displayed.

(Other Embodiments)

As described above, the embodiment has been described as an example of the technology disclosed in the present application. However, the technique of the present disclosure is not limited thereto, and is also applicable to embodiments obtained by appropriately performing changes, replacements, additions, omissions, and the like. Therefore, other embodiments are described below.

In the above embodiment, the diffraction structure of the expansion region is the interference fringe, but the present invention is not limited thereto. For example, a physical uneven structure filled with a resin may be used.

In the above embodiment, the virtual image Iv is visually recognized by the observer D by reflecting the divided and replicated light flux L2 on the windshield 5, but the present invention is not limited thereto. The virtual image Iv may be visually recognized by the observer D by reflecting the divided and replicated light flux L2 on a combiner using the combiner instead of the windshield 5.

In the above embodiment, the first direction in which the light flux L1A is expanded in the first expansion region 23 and the second direction in which the light flux L1B is expanded in the second expansion region 25 are orthogonal to each other, but the present invention is not limited thereto. As illustrated in Fig. 6, in expanding the light flux L1A in the first direction in the first expansion region 23, a component expanding in the horizontal direction only needs to be larger than that in the direction along the Z axis, and in expanding the light flux L1B in the second direction in the second expansion region 25, a component expanding in the direction along the Z axis only needs to be larger than that expanding in the horizontal direction.

In the above embodiment, the case where the HUD system 1 is applied to the vehicle 3 such as an automobile has been described. However, the object to which the HUD system 1 is applied is not limited to the vehicle 3. The object to which the HUD system 1 is applied may be, for example, a train, a motorcycle, a ship, or an aircraft, or an amusement machine without movement. In the case of an amusement machine, the light flux from the display 11 is reflected by a transparent curved plate as a light-transmitting member that reflects the light flux emitted from the display 11 instead of the windshield 5. Further, the real view visually recognizable by a user through the transparent music plate may be a video displayed from another video display. That is, a virtual image by the HUD system 1 may be displayed so as to be superimposed on a video displayed from another video display. As described above, any one of the windshield 5, the combiner, and the transparent curved plate may be adopted as the light-transmitting member in the present disclosure.

In the above embodiment, the optical system 2 is used in the HUD system 1 that displays the virtual image Iv. However, the present disclosure is not limited to the embodiment. The optical system 2 may be used, for example, in an image display system in which the observer directly observes the light flux emitted from the emission surface 27 instead of viewing the virtual image through the light-transmitting member. In this case, since the observer is a person who directly views the image formed by the emitted light flux, the observer is not limited to the passenger of the moving body.

(Outline of Embodiments)

(1) An optical system of the present disclosure includes: a display that emits a light flux visually recognized by an observer as an image, and a light guide body that replicates the light flux. The light guide body includes an incident surface on which the light flux from the display is incident and an emission surface from which the light flux is emitted from the light guide body. A light beam at a center of the light flux emitted from the display is incident on the incident surface of the light guide body. The light flux incident on the incident surface of the light guide body is changed in a traveling direction by diffraction by a diffraction structure of a coupling region in the light guide body. The light flux whose traveling direction has been changed is expanded by being replicated in a first direction corresponding to the horizontal direction of the virtual image visually recognized by the observer due to diffraction by the diffraction structure of the expansion region in the light guide body, a second direction corresponding to the vertical direction of the image, or both directions thereof, and then emitted from the emission surface. When a normal direction with respect to a surface of the light guide body at a center or a center of gravity of the expansion region is defined as a Z-axis direction, and a tangential plane is defined as an XY plane, and a traveling direction of a center light beam of the light flux incident on the expansion region on the XY plane is defined as an X axis, and a direction perpendicular to the X axis is defined as a Y axis, the diffraction structure of the expansion region is formed such that a light flux duplicated when the light flux incident on the expansion region is transmitted through the XY plane of the expansion region from a positive direction of the Z axis and a light flux duplicated when the light flux is transmitted through the XY plane of the expansion region from a negative direction of the Z axis are accommodated within a viewing angle at which the image is visually recognizable, and the diffractive structure of the expansion region is inclined with respect to the Z-axis direction.

Since the diffraction structure of the expansion region is inclined with respect to the Z-axis direction, the peaks of the diffraction efficiency of the light flux duplicated when the light flux incident on the expansion region is transmitted through the XY plane of the expansion region from the positive direction of the Z-axis and the light flux duplicated when the light flux is transmitted through the XY plane of the expansion region from the negative direction of the Z-axis can be formed at different positions within the viewing angle. Therefore, it is possible to provide the optical system in which the visual field range in which the image is visible is expanded.

(2) In the optical system of (1), when the viewing angle of the image viewed by the observer is defined as $\pm$ F degrees, an angle between the diffractive structure of the expansion region on the XY plane and a traveling direction of the light flux incident on the expansion region is defined as $\alpha$ degrees, an inclination angle between the diffractive structure and the Z axis is defined as $\beta$ degrees, an angle between a center light beam of the light flux incident on the expansion region and the Z axis is defined as $\theta A$ degrees, and an angle between the center light beam of the light flux diffracted and emitted in the expansion region and the Z axis is defined as $\theta B$ degrees, the following relational expression is satisfied.

$$|\theta A - \theta B| < |F|/2,$$

and

$$|\beta| \times 2 \times \cos(\alpha) \le |F| - |\theta A - \theta B|,$$

where $\beta \ne 0$

(3) In the optical system of (2), the optical system has two expansion regions, one of the expansion regions expands by duplicating a light flux incident on the one of the expansion regions in the first direction corresponding to the horizontal direction of the image visually recognized by the observer, and the other of the expansion regions expands by duplicating a light flux incident on the other of the expansion regions in the second direction corresponding to the vertical direction of the virtual image visually recognized by the observer.

(4) In the optical system of (3), the relational expression is satisfied in the expansion region having a narrower diffraction pitch of the diffractive structure in the two expansion regions.

(5) In the optical system of any one of (1) to (4), the expansion region includes a transmission volume hologram.

(6) In the optical system of (5), a thickness T of the volume hologram in the Z direction and a wavelength $\lambda$ [$\mu$m] of a light flux incident on the volume hologram satisfy the following relational expression.

$$T > (- 2.3576 \times \lambda + 0.0952) \times |F| + (22.3540 \times \lambda - 0.9125)$$

(7) In the optical system of (5) or (6), a thickness T of the volume hologram in the Z direction and a wavelength $\lambda$ [$\mu$m] of a light flux incident on the volume hologram satisfy the following relational expression.

$$T < (- 3.8645 \times \lambda - 0.2185) \times |F| + (37.4910 \times \lambda + 1.5298)$$

(8) In the optical system of any one of (1) to (7), the light beam at the center of the light flux emitted from the display is incident while being inclined with respect to a normal direction of the incident surface of the light guide body, and the light beam at the center of the light flux emitted toward the light-transmitting member from the light guide body is emitted while being inclined with respect to a normal direction of the emission surface of the light guide body.

(9) A head-up display system of the present disclosure includes the optical system according to any one of (1) to (8), and a light-transmitting member that reflects the light flux emitted from the light guide body, in which the head-up display system displays the image as a virtual image so as to be superimposed on a real view visually recognizable through the light-transmitting member.

(10) In the head-up display system of (9), the light-transmitting member is a windshield of a moving body.

INDUSTRIAL APPLICABILITY

The present disclosure is applicable to an optical system that duplicates and displays an image and a head-up display system.

EXPLANATION OF REFERENCES

| | |
|---|---|
| 1 | head-up display system |
| 3 | vehicle |
| 3a | center line |
| 5 | windshield |
| 11 | display |
| 13 | light guide body |
| 13a | first main surface |
| 13b | second main surface |
| 15 | controller |
| 17 | storage |
| 20 | incident surface |
| 21 | coupling region |
| 23 | first expansion region |
| 23a | point |
| 25 | second expansion region |
| 25a | point |
| 27 | emission surface |
| Ac | visual recognition region |
| D | observer |
| Iv | virtual image |
| k1, k2, k3 | wave number vector |
| L1, L1A, L1B, L2 | light flux |

**Claims**

1. An optical system comprising:

a display that emits a light flux visually recognized by an observer as an image; and
a light guide body that replicates the light flux,
wherein the light guide body includes an incident surface on which the light flux from the display is incident and an emission surface from which the light flux is emitted from the light guide body,
wherein a light beam at a center of the light flux emitted from the display is incident on the incident surface of the light guide body,
wherein the light flux incident on the incident surface of the light guide body is changed in a traveling direction by diffraction by a diffraction structure of a coupling region in the light guide body,
wherein the light flux changed in the traveling direction is emitted from the emission surface after being expanded by being replicated in a first direction corresponding to a horizontal direction of the image visually recognized by the observer due to diffraction by a diffraction structure of an expansion region in the light guide body, a second direction corresponding to a vertical direction of the image, or both the directions, and
wherein, when a normal direction with respect to a surface of the light guide body at a center or a center of gravity of the expansion region is defined as a Z-axis direction, and a tangential plane is defined as an XY plane, and
a traveling direction of a center light beam of the light flux incident on the expansion region on the XY plane is defined as an X axis, and a direction perpendicular to the X axis is defined as a Y axis,
the diffraction structure of the expansion region is formed such that a light flux duplicated when the light flux incident on the expansion region is transmitted through the XY plane of the expansion region from a positive direction of the Z axis and a light flux duplicated when the light flux is transmitted through the XY plane of the expansion region from a negative direction of the Z axis are accommodated within a viewing angle at which the image is visually recognizable, and
the diffractive structure of the expansion region is inclined with respect to the Z-axis direction.

2. The optical system according to claim 1, wherein, when the viewing angle of the image viewed by the observer is defined as $\pm F$ degrees, an angle between the diffractive structure of the expansion region on the XY plane and a traveling direction of the light flux incident on the expansion region is defined as $\alpha$ degrees, an inclination angle between the diffractive structure and the Z axis is defined as $\beta$ degrees, an angle between a center light beam of the light flux incident on the expansion region and the Z axis is defined as $\theta A$ degrees, and an angle between the center light beam of the light flux diffracted and emitted in the expansion region and the Z axis is defined as $\theta B$ degrees, a following relational expression is satisfied.

$$|\theta A - \theta B| < |F|/2,$$

and

$$|\beta| \times 2 \times \cos(\alpha) \le |F| - |\theta A - \theta B|,$$

where $\beta \ne 0$

3. The optical system according to claim 2,

wherein the optical system has two expansion regions,
wherein one of the expansion regions expands by duplicating a light flux incident on the one of the expansion regions in the first direction corresponding to the horizontal direction of the image visually recognized by the observer, and
wherein another of the expansion regions expands by duplicating a light flux incident on the other of the expansion regions in the second direction corresponding to the vertical direction of the image visually recognized by the observer.

4. The optical system according to claim 3, wherein the relational expression is satisfied in the expansion region having a narrower diffraction pitch of the diffractive structure in the two expansion regions.

5. The optical system according to any one of claims 1 to 4, wherein the expansion region includes a transmission volume hologram.

6. The optical system according to claim 5, wherein a thickness T [$\mu$m] of the volume hologram in the Z direction and a wavelength $\lambda$ [$\mu$m] of a light flux incident on the volume hologram satisfy a following relational expression.

$$T > (- 2.3576 \times \lambda + 0.0952) \times |F| + (22.3540 \times \lambda - 0.9125)$$

7. The optical system according to claim 5 or 6, wherein a thickness T [$\mu$m] of the volume hologram in the Z direction and a wavelength $\lambda$ [$\mu$m] of a light flux incident on the volume hologram satisfy a following relational expression.

$$T < (- 3.8645 \times \lambda - 0.2185) \times |F| + (37.4910 \times \lambda + 1.5298)$$

8. The optical system according to any one of claims 1 to 7, wherein the light beam at the center of the light flux emitted from the display is incident while being inclined with respect to a normal direction of the incident surface of the light guide body, and the light beam at the center of the light flux emitted from the light guide body is emitted while being inclined with respect to a normal direction of the emission surface of the light guide body.

9. A head-up display system comprising:

the optical system according to any one of claims 1 to 8; and
a light-transmitting member that reflects the light flux emitted from the light guide body,
wherein the head-up display system displays the image as a virtual image so as to be superimposed on a real view visually recognizable through the light-transmitting member.

10. The head-up display system according to claim 9, wherein the light-transmitting member is a windshield of a moving body.

*Fig.1*

*Fig.2*

Fig.3

Fig.4

EP 4 379 451 A1

*Fig.5A*

EP 4 379 451 A1

EP 4 379 451 A1

Fig.5B

Fig.5C

*Fig.6*

EP 4 379 451 A1

*Fig.7*

*Fig.8*

*Fig.9*

*Fig.10*

L1A

L1B

31

23

L1

Y

X

Z

*Fig.11*

Z

θA

θB

L1B

Y

L1A

X

*Fig.12*

| | F [degrees] | θA [degrees] | θB [degrees] | α [degrees] | β [degrees] | \|θA − θB\| | \|β\|·cos(α)·2 | Effect |
|---|---|---|---|---|---|---|---|---|
| Example 1 | 3.50 | 50.00 | 50.00 | 45.00 | 1.24 | 0.00 | 1.75 | ◎ |
| Comparative Example 1 | 3.50 | 50.00 | 50.00 | 45.00 | 0.00 | 0.00 | 0.00 | — |
| Example 2 | 3.50 | 49.00 | 50.00 | 44.57 | 0.71 | 1.00 | 1.01 | ◎ |
| Example 3 | 3.50 | 59.00 | 60.00 | 44.71 | 0.71 | 1.00 | 1.01 | ◎ |
| Example 4 | 3.50 | 59.00 | 58.50 | 50.76 | -0.32 | 0.50 | 0.41 | ◎ |
| Example 5 | 3.50 | 59.00 | 59.55 | 34.85 | 0.48 | 0.55 | 0.79 | ◎ |
| Example 6 | 3.50 | 50.00 | 46.00 | 46.80 | -2.83 | 4.00 | 3.87 | ○ |
| Example 7 | 3.50 | 50.00 | 53.00 | 43.81 | 2.12 | 3.00 | 3.06 | ○ |
| Comparative Example 2 | 3.50 | 59.00 | 59.00 | 52.97 | 0.00 | 0.00 | 0.00 | — |

*Fig.13*

(a)

A1  A2           A3           A2        A1

+1.5

VERTICAL
VIEW ANGLE
[DEGREES]    0

-1.5

-3.5              0              +3.5

HORIZONTAL VIEW ANGLE [DEGREES]

(b)

A1              A2        A3

+1.5

VERTICAL
VIEW ANGLE
[DEGREES]    0                                    A2

-1.5                                            A1

-3.5              0              +3.5

HORIZONTAL VIEW ANGLE [DEGREES]

(c)

A1  A2    A3         A4

+1.5

VERTICAL
VIEW ANGLE
[DEGREES]    0                                    A3

                                                 A2

-1.5                                            A1

-3.5              0              +3.5

HORIZONTAL VIEW ANGLE [DEGREES]

## Fig.14

(a)

A1     A2     A3     A2

VERTICAL VIEW ANGLE [DEGREES]

+1.5

0

-1.5

A1

-3.5     0     +3.5

HORIZONTAL VIEW ANGLE [DEGREES]

(b)

A1     A2     A3     A2

VERTICAL VIEW ANGLE [DEGREES]

+1.5

0

-1.5

A1

-3.5     0     +3.5

HORIZONTAL VIEW ANGLE [DEGREES]

Fig.15

(a)

A1    A2    A3    A2

VERTICAL VIEW ANGLE [DEGREES]

+1.5

0

-1.5

A1

-3.5    0    +3.5

HORIZONTAL VIEW ANGLE [DEGREES]

(b)

A1    A2    A3

VERTICAL VIEW ANGLE [DEGREES]

+1.5

0

-1.5

A2

A1

-3.5    0    +3.5

HORIZONTAL VIEW ANGLE [DEGREES]

# Fig.16

(a)

A1a   A1b   A2a   A2b   A3a   A2b   A2a   A1b

VERTICAL VIEW ANGLE [DEGREES]

+1.5

0

-1.5

A1a

-3.5                    0                    +3.5

HORIZONTAL VIEW ANGLE [DEGREES]

(b)

A1                          A2    A3

VERTICAL VIEW ANGLE [DEGREES]

+1.5

0

-1.5

A2

A1

-3.5                    0                    +3.5

HORIZONTAL VIEW ANGLE [DEGREES]

*Fig.17*

(a)

A1    A2   A3    A2    A1

VERTICAL VIEW ANGLE [DEGREES]

+1.5

0

-1.5

-3.5          0          +3.5

HORIZONTAL VIEW ANGLE [DEGREES]

(b)

A1    A2   A3    A2    A1

VERTICAL VIEW ANGLE [DEGREES]

+1.5

0

-1.5

-3.5          0          +3.5

HORIZONTAL VIEW ANGLE [DEGREES]

## Fig.18

(a)

VERTICAL VIEW ANGLE [DEGREES]

A1    A2    A3    A4    A5

+1.5

A3
A2

0

A1

-1.5

-3.5                    0                    +3.5

HORIZONTAL VIEW ANGLE [DEGREES]

(b)

VERTICAL VIEW ANGLE [DEGREES]

A1              A2    A3    A4    A5

+1.5

A3

0

A2

A1

-1.5

-3.5                    0                    +3.5

HORIZONTAL VIEW ANGLE [DEGREES]

Fig.19

(a)

A1  A2  A3  A4  A3  A2

VERTICAL VIEW ANGLE [DEGREES]

+1.5

0

-1.5

A1

-3.5    0    +3.5

HORIZONTAL VIEW ANGLE [DEGREES]

(b)

A1g  A1f  A1e  A1d

VERTICAL VIEW ANGLE [DEGREES]

+1.5

0

-1.5

A1c

-3.5    0    +3.5

HORIZONTAL VIEW ANGLE [DEGREES]

Fig.20

## Fig.21

*Fig.22*

*Fig.23*

## INTERNATIONAL SEARCH REPORT

| International application No. |
| --- |
| **PCT/JP2022/016242** |

| **A. CLASSIFICATION OF SUBJECT MATTER** |
| --- |
| *G02B 27/01*(2006.01)i; *B60K 35/00*(2006.01)i; *G02B 5/18*(2006.01)i; *G02B 5/32*(2006.01)i<br>FI:   G02B27/01; G02B5/18; G02B5/32; B60K35/00 A |
| According to International Patent Classification (IPC) or to both national classification and IPC |

| **B. FIELDS SEARCHED** |
| --- |
| Minimum documentation searched (classification system followed by classification symbols)<br>    G02B27/01; G02B27/02; B60K35/00; G02B5/18; G02B5/32; H04N5/64 |
| Documentation searched other than minimum documentation to the extent that such documents are included in the fields searched<br>    Published examined utility model applications of Japan 1922-1996<br>    Published unexamined utility model applications of Japan 1971-2022<br>    Registered utility model specifications of Japan 1996-2022<br>    Published registered utility model applications of Japan 1994-2022 |
| Electronic data base consulted during the international search (name of data base and, where practicable, search terms used) |

| **C. DOCUMENTS CONSIDERED TO BE RELEVANT** | | |
| --- | --- | --- |
| Category* | Citation of document, with indication, where appropriate, of the relevant passages | Relevant to claim No. |
| A | JP 2019-184920 A (DENSO CORP.) 24 October 2019 (2019-10-24)<br>    entire text, all drawings | 1-10 |
| A | US 2020/0264429 A1 (THALES) 20 August 2020 (2020-08-20)<br>    entire text, all drawings | 1-10 |
| A | US 2020/0257065 A1 (FACEBOOK TECHNOLOGIES, LLC) 13 August 2020 (2020-08-13)<br>    entire text, all drawings | 1-10 |
| A | US 2020/0341280 A1 (EARDG PHOTONICS, INC.) 29 October 2020 (2020-10-29)<br>    entire text, all drawings | 1-10 |
| A | US 2014/0300966 A1 (VUZIX CORP.) 09 October 2014 (2014-10-09)<br>    entire text, all drawings | 1-10 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 May 2022** | **24 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/016242**

| Patent document cited in search report | | | Publication date (day/month/year) | Patent family member(s) | | | Publication date (day/month/year) |
|---|---|---|---|---|---|---|---|
| JP | 2019-184920 | A | 24 October 2019 | DE | 102019205138 | A1 | |
| | | | | entire text, all drawings | | | |
| US | 2020/0264429 | A1 | 20 August 2020 | EP | 3696595 | A1 | |
| | | | | CN | 111562672 | A | |
| US | 2020/0257065 | A1 | 13 August 2020 | WO | 2020/167602 | A2 | |
| US | 2020/0341280 | A1 | 29 October 2020 | (Family: none) | | | |
| US | 2014/0300966 | A1 | 09 October 2014 | WO | 2013/033274 | A1 | |
| | | | | EP | 2751611 | A1 | |
| | | | | EP | 3309602 | A1 | |
| | | | | CN | 104040410 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10429645 B

- WO 2018198587 A